# EUROPEAN PATENT APPLICATION

(11) **EP 4 707 044 A1**
(43) Date of publication of application: **11.03.2026**
(21) Application number: 24198357.6
(22) Date of filing: 04.09.2024
(51) Int. Cl.: B60L 53/14, B60L 53/16, B60L 53/30, B60L 53/31, H02J 7/00

(54) **ELECTRIC VEHICLE CHARGER**

(71) Applicant: Hatelgas Elektrik Elektronik Bilgisayar Enerji Makinainsaat Hayvancilik Sanayi Ticaret L. S., Konak Izmir (TR)
(72) Inventor: KAYA, Onur, Konak (Izmir) (TR)
(74) Representative: Hernández Hernández, Carlos

(57) **Abstract**

Electric vehicle charger comprising a box unit (1) configured to be integrated in a wall and to house at least one charging unit, and attached to a tempered-glass or fiberglass front panel (3),the area of the front panel (3) being wider than the box unit (1), so that, when the charger is installed in the wall, the back of the front panel (3) is in contact with the wall, emerging between 1 - 2 cm. from it. The front panel (3) has at least one socket (4) operatively coupled to the at least one charging unit.

## Description

### Technical field

The present invention belongs to the field of devices for charging the batteries of electric vehicles.

### Background art

Charging stations for electric vehicles can be found on the wall in shopping malls, parking lots, gas stations, hotels and private residences.

Charging stations can be free-standing units, known as charger posts. These chargers are inconvenient in that they take up much space, stand in the way, can be accidentally hit by the car or the user may trip on the cables.

Also known are wall-mounted chargers, which require cables that will hang from an electrical socket to the charger. These cables encumber the user, which can trip on them. Given that these chargers will protrude significantly from the wall, they can be accidentally hit by the user.

The main purpose of the invention is to make electric vehicle chargers more practical for the user by reducing the need of outside cabling, preventing electrical leaks due to cable damage and integrating the device in the environment.

### Summary of the invention

The subject matter of the present invention is an EV charging station according to claim 1.

The charging station comprises a box unit (1) configured to be integrated in a wall and to house at least one charging unit. The charging station also comprises a front panel (3) emerging from the wall and having at least one charging socket (4) operatively coupled to the at least one charging unit.

In a preferred embodiment, the box unit (1) comprises mounting holes (2) for attachment to the wall and the front panel (3) is made of tempered glass or fiberglass.

### Brief description of drawings

FIG. 1: Perspective view of the electric vehicle charger.
FIG. 2: The electric vehicle charger mounted on a wall.

### Description of embodiments

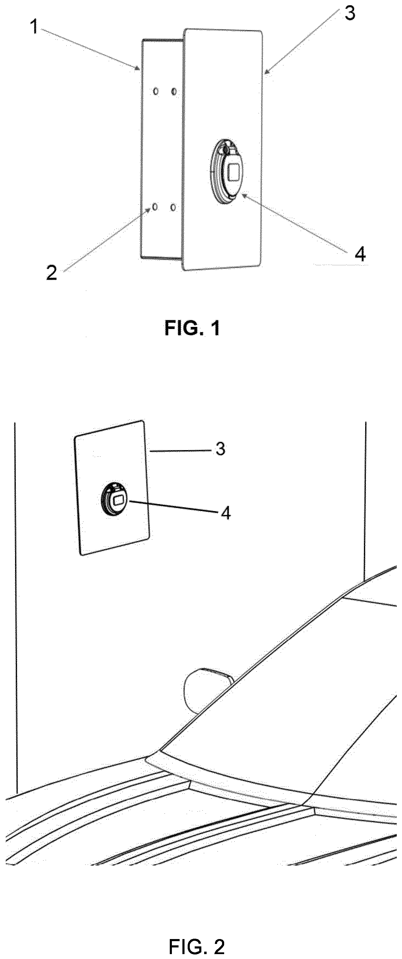

Fig. 1 represents an electric vehicle charger according to the present invention. The electric vehicle charger comprises a box unit (1). In a preferred embodiment, the box unit is a rectangular prism. The walls of the box unit (1) are preferably made of galvanized steel sheet. At least one charging unit (not shown) is housed in the box unit (1). By charging unit is understood the standard equipment needed to transmit the energy from the electrical cables to a charging socket (4).

The box unit (1) features mounting holes (2), which can be practiced in the side walls of the box unit (1), as shown in Fig. 1, or in the back wall, or in both. The box unit (1) does not have a galvanized steel sheet front wall. Instead, the front side of the box unit (1) is attached to a front panel (3), preferably made of tempered glass or fiberglass. The attachment between the box unit (1) and the front panel (3) is preferably made with screws. The front panel features at least one charging socket (4).

The box unit (1) is configured to be integrated in a wall. To this end, the charger requires some installation work. Once the point in which the charger is to be installed has been selected, a hole is made in the wall, roughly of a rectangular form to fit the box unit (1) in such a way that it is level with the wall. The box unit (1) is attached to the sides of the hole by way of screws running through the mounting holes (2). Any gaps between the box unit (1) and the wall opening are filled with cement or the like.

The next operation needed to install the charger is to open slots in the wall for the conduction of the electrical cables connected to the main network line. However, existing electrical cables can be used for this purpose, minimizing the need to open new slots.

The charging unit (not shown) is installed inside the box unit (1) and connected to the electrical cables through an opening in the lower side of the box unit (1). After covering the cabling slots with cement or the like, the installation is finished by fixing the front panel (3) to the exposed side of the box unit (1) by any suitable means, for instance, with screws. The area of the front panel (3) is significantly wider than the area of the box unit (1), therefore the box unit (1) will be completely covered by the front panel (3) and a substantial portion of the front panel (3) back will be in contact with the wall.

Since the box unit (1) containing the electrical devices required for the functioning of the charger is recessed into the wall, the front panel (3) has only to accommodate a socket (4), thus permitting a substantially flat shape. In one embodiment, the front panel (3) is between 1 - 2 cm. thick.

Since the cables are routed through the wall, cable damage is eliminated and possible accidents and damages are prevented. Even if there is an electrical leakage within the system, the user will not be exposed to it.

The front panel (3) can be designed specifically for the consumer's demand or the condition of the area to be installed. Fig. 2 shows the electric vehicle charger once the installation has been completed. Only the front panel (3) is exposed to the view. Its substantially flat shape does not get in the way of the user.

## Claims

1. Electric vehicle charger **characterized in that** it comprises:
a box unit (1) configured to be integrated in a wall and to house at least one charging unit,
and a front panel (3) attached to the front side of the box unit and in contact with the wall, the front panel (3) having at least one socket (4) operatively coupled to the at least one charging unit.

2. The electric vehicle charger of claim 1, **characterized in that** the box unit (1) comprises mounting holes (2) for attachment to the wall.

3. The electric vehicle charger of claim 1, **characterized in that** the front panel (3) is made of tempered glass or fiberglass.
